# EUROPÄISCHE PATENTANMELDUNG

(11) **EP 2 308 706 A1**
(43) Veröffentlichungstag der Anmeldung: **13.04.2011**
(21) Anmeldenummer: 10186561.6
(22) Anmeldetag: 05.10.2010
(51) Int. Cl.: B60H 1/34, B60S 1/54

(54) **Luftausströmvorrichtung**

(30) Priorität: 09.10.2009 DE 102009048998
(71) Anmelder: Behr GmbH & Co. KG, 70469 Stuttgart (DE)
(72) Erfinder: Benamira, Salah, 70180, Stuttgart (DE); Bürkle, Rainer, 70736, Fellbach (DE)
(74) Vertreter: Grauel, Andreas

(57) **Zusammenfassung**

Die Erfindung betrifft eine Luftausströmvorrichtung (5) für einen Kraftfahrzeuginnenraum (2), die zumindest einen ersten Luftausströmmodus (L₁) und zumindest einen zweiten Luftausatrömmodus (L₂) aufweist. Bei einer Änderung des Luftausströmmodus (L₁, L₂) wird sowohl die Richtung der ausströmenden Luft (L) in einer ersten Richtung (α), als auch die Ausströmbreite (θ) der ausströmenden Luft (L) in einer zweiten, zur ersten Richtung senkrecht stehenden Richtung verändert.

## Beschreibung

Die Erfindung betrifft eine Luftausströmvorrichtung, insbesondere eine Luftausströmvorrichtung für einen Kraftfahrzeuginnenraum, die zumindest einen ersten Luftausströmmodus und zumindest einen zweiten Luftausströmmodus aufweist. Die Erfindung betrifft weiterhin ein Armaturenbrett und/oder ein Cockpitmodul für ein Kraftfahrzeug. Darüber hinaus betrifft die Erfindung ein Kraftfahrzeug. Schließlich betrifft die Erfindung ein Verfahren zum Betreiben einer Luftausströmvorrichtung, insbesondere einer Luftaussirömvorrichtung für einen Kraftfahrzeuginnenraum.

Luftausströmvorrichtungen finden dann Anwendung, wenn es darum geht, geschlossene Räume zu belüften. Beispielsweise kann es sich dabei um die Innenräume von Kraftfahrzeugen, wie insbesondere von Personenkraftwagen handeln, Bei der dem Kraftfahrzeuginnenraum zugeführten Zuluft kann es sich um Frischluft, um Umluft (welche aus dem Kraftfahrzeuginnenraum entnommen wurde) sowie um eine Kombination aus beidem handeln. Die dem Krartfahrzeuginnenraum zugeführte Zuluft wird dabei in aller Regel zunächst aufgearbeitet, wie beispielsweise erwärmt, abgekühlt und/oder gefiltert.

Um die dem Kraftfahrzeuginnenraum zuzuführende Frischluft in den Fahrzeuginnenraum abzugeben werden bei heutigen Kraftfahrzeugen üblicherweise mehrere, an unterschiedlichen Orten angeordnete und unterschiedlich ausgebildete Luftausströmdüsen verwendet. Üblicherweise werden heutzutage Fußraumdüsen, Mitteldüsen und Defrostauslassdüsen verwendet. Die Fußraumdüsen geben die Zuluft typischerweise als diffuse Luftströmung in den Fußraum ab. Bei der Deftrostauslassdüse handelt es sich um Luftauslassdüsen, welche in Richtung der Frontscheibe, sowie in Richtung der Seitenscheiben gerichtet ist. Derartige Düsen sind in vielen Ländern gesetzlich vorgeschrieben, um die Scheiben bei niedrigen Außentemperaturen durch Erwärmung beschlagfrei (insbesondere eisfrei) zu halten. Um ihre Funktion optimal zu erfüllen sind die Defrostdüsen üblicherweise derart ausgebildet, dass sie die korrespondierenden Scheiben zielgerichtet (in aller Regel mit einer gerichteten, so genannten "spot"- Luftströmung) und im Wesentlichen vollständig mit Zuluft beaufschlagen. Schließlich werden typischerweise noch sogenannte Mitteidüsen vorgesehen, welche im Armaturenbrett vorgesehen werden und Frischluft (meist als gerichtete Luftströmung, zum Teil auch zusätzlich oder alternativ als diffuse Luftströmung) in den Kopfbereich sowie den Brustbereich der Frontpassagiere abgeben (im Rahmen der vorliegenden Anmeldung werden üblicherweise auch die in vertikaler Richtung gesehen mittig liegenden Seitendüsen als "Mitteldüsen" aufgefasst).

Die beschriebene "klassische" Anordnung von Luftauslassdüsen (Fußraumdüse, Mitteldüse und Defrostauslassdüse) kann sich jedoch speziell bei bestimmten Rahmenbedingungen als nachteilig erweisen, Insbesondere bei hohen Außentemperaturen, wenn die Klimaanliage die in den Innenraum austretende Zuluft im Verhältnis zur Außentemperatur deutlich absenkt kann mit der klassischen Düsenanordnung eine zugfreie Belüftung des Kraftfahrzeuginnenraums auch bei niedrigen Luftmengen nur schwer oder gar nicht realisiert werden: ein Austritt von kalter Luft über die Fußraumdüsen wird als unangenehm empfunden. Ein Austritt kalter Luft über die Mitteldüsen verursacht Zugeffekte. Ein Austritt von kalter Luft über die Defrosterdüsen wiederum kann zu einem Niederschlag von Kondenswasser an den Scheiben und damit zu einer entsprechenden Sichtbehinderung führen.

Eine Möglichkeit, um auch bei derartigen widrigen Betriebsbedingungen eine zugfreie Belüftung des Kraftfahrzeuginnenraums bereit stellen zu können besteht darin, dass sogenannte indirekte Belüftungsöffnungen vorgesehen werden. Es handelt sich hierbei um einen weiteren Luftauslass, der zwischen der Mitteldüse und den Defrostauslassdüsen angeordnet ist, und aus den bei Bedarf ein Luftstrom austreten kann. Über die indirekten Belüftungsdüsen kann die Zuluft über eine große Austrittsfläche und als eher nach oben gerichtete, indirekte und diffuse Luftströmung zugfrei und gleichmäßig dem Kraftfahrzeuginnenraum zugeführt werden. Eine derartige Düsenanordnung mitsamt indirekter Luftauslassdüse ist beispielsweise in der deutschen Offenlegungsschrift DE 10 2004 060 387 A1 beschrieben. Ein großer Nachteil bei derartigen indirekten Belüftungsdüsen besteht darin, dass sie die Komplexität der Klimaanlage erhöhen und insbesondere einen relativ großen Bauraum für die zusätzlichen Luftführungskanäle und Luftaustrittsdüsen erfordern. Derartige indirekte Betüftungsdüsen sind daher in aller Regel nur in den Fahrzeugen der oberen Klasse und selbst hier oftmals nur als Option erhältlich.

Eine weitere Herangehensweise wurde in EP 1 243 450 B1 vorgeschlagen. Hier ist ein Kraftfahrzeuginnenraum-Belüftungssystem mit einer Luftdüse beschrieben, die zwei beweglich angeordnete Düsenwände aufweist, die relativ zueinander jeweils um eine Drehachse gedreht werden können. Je nach Stellung der Düsenwände tritt der aus der Luftdüse austretende Luftstrom in Richtung der Windschutzscheibe oder eher in Richtung des Fahrzeuginnenraums aus. Darüber hinaus kann in Abhängigkeit von der Winkelstellung der Düsenwande zueinander ein eher gerichteter Luftstrom (der insbesondere zum Defrosten der Windschutzscheibe geeignet ist) sowie ein eher diffuser Luftstrom (der insbesondere zur zugfreien Belüftung des innenraums geeignet ist) realisiert werden. Es hat sich jedoch in der Praxis gezeigt, dass die vorgeschlagene Düse einen oftmals nur unzureichenden Kompromiss zwischen guter Defrostwirkung der Windschutzscheibe und hohem Komfort für die Fahrzeuginsassen darstellt.

Es besteht somit nach wie vor Bedarf an einem verbesserten Belüftungssystem für Innenräume, insbesondere für Kraftfahrzeuginnenräume.

Die vorliegende Erfindung löst diese Aufgabe.

Dazu wird vorgeschlagen, eine Luftausströmvorrichtung, die zumindest einen ersten Luftausströmmodus und zumindest einen zweiten Luftausströmmodus aufweist, derart auszubilden, dass bei einer Änderung des Luftsusströmmodus die Richtung der ausströmenden Luft in einer ersten Richtung verändert wird und die Ausströmbreite der ausströmenden Luft in einer zweiten, zur ersten Richtung im Wesentlichen senkrecht stehenden Richtung verändert wird. Bei der Luftausströmvorrichtung kann es sich insbesondere um eine Luftausströmvorrichtung für einen Kraftfahrzeuginnenraum handeln. Die Erfinder haben zu ihrer eigen Überraschung festgestellt, das es mit der vorgeschlagenen Ausbildung der Luftausströmvorrichtung sehr leicht möglich ist, eine Luftausströmvorrichtung zu realisieren, mit welcher einerseits eine sehr gute Defrostfunktion für die Windschutzscheibe eines Kraftfahrzeugs, andererseits auch eine zugfreie Innenraumbelüftung selbst bei hohen Außentemperaturen und starker Kühlleistung der Kraftfahrzeugklimaanlage möglich ist. Bei der ersten Richtung, in der die Richtung der ausströmenden Luft verändert werden kann, kann es sich insbesondere um die Richtung der Fahrzeuglängsachse eines Kraftfahrzeugs handeln. Dadurch kann der aus der Luftausströmvorrichtung ausströmende Luftstrahl wechselweise auf die Windschutzscheibe gelenkt werden, bzw. so gelenkt werden, dass dieser nicht auf Die Windschutzscheibe trifft. Insbesondere in einem Defrostmodus (beispielsweise kann es sich beim ersten Luftausströmmodus um einen solchen handeln) ist es nämlich sinnvoll, das warme Luft direkt auf die Windschutzscheibe trifft. Demgegenüber ist bei einem indirekten Belüftungsmodus (beim zweiten Luftausströmungsmodus kann es sich um einen solchen handeln) dagegen ein Auftreffen der aus der Luftausströmvorrichtung austretenden Luft auf die Windschutzscheibe nicht nur nicht erforderlich, sondern ganz im Gegenteil unerwünscht. Ein Auftreffen der kalten Luft auf die heiße Windschutzscheibe könnte nämlich insbesondere im Sommer zu einem Scheibenbeschlag führen, der unerwünscht oder sogar gefährlich sein kann, Dementsprechend kann es sich bei den beiden Luftausströmmodi folglich um Modi handeln, welche sich von ihrer Funktionalität her im Wesentlichen wechselweise ausschließen. Bei der zweiten Richtung, in der die Ausströmbreite der ausströmenden Luft verändert wird, kann es sich insbesondere um eine parallel zur Fahrzeugquerachse liegende Richtung handeln. Für einen optimalen Betrieb in einem Defrostmodus ist es nämlich sinnvoll, dass die aus der Luftausströmvorrichtung austretende Luft meist breit gefächart ist, nämlich so, dass diese vorzugsweise die gesamte Breite der Windschutzscheibe erreicht. Demgegenüber ist es bei einem indirekten Belüftungsbetrieb im Gegenteil eher erwünscht, dass die Breite der aus der Luftausströmvorrichtung austretenden Luft eher schmal austritt. Auf diese Weise kann die aus der Luftausströmvorrichtung austretende Luft "zwischen den beiden Früntpassagieren" hindurch strömen, sodass für diese keine unerwünschten Zugerschefnungen auftreten müssen. Natürlich ist es auch möglich, das auch in der ersten Richtung (oder auch gegebenenfalls in einer weiteren Richtung) die Ausströmbreite der ausströmenden Luft verändert wird bzw. in einer ersten Richtung (bzw. in einer weiteren Richtung) die Richtung der ausströmenden Luft verändert wird. Weiterhin können auch weitere Luftausströmmodi vorgesehen werden. Insbesondere sind auch Zwischenstellungen zwischen "Extremwerten" möglich, wobei sowohl sprungartige, als auch kontinuierliche Wechsel denkbar sind.

Bevorzugt ist die Luftausströmvorrichtung derart ausgebildet und eingerichtete, dass sie in zumindest im ersten Luftausströmmodus und/oder dem zweiten Luftausströmmodus eine diffuse Luftströmung und/oder eine gerichtete Luftströmung freigibt, Insbesondere erweist sich zum Defrosten von Scheiben in der Regel eine gerichtete Luftströmung als vorteilhaft, wohingehend zur zugfreien Belüftung eines Kraftfahrzeuginnenraums in aller Regel eine diffuse Luftströmung von Vorteil ist.

Üblicherweise erweist es sich als vorteilhaft, wenn die Luftausströmvorrichtung derart ausgebildet ist, dass bei einem Wechsel des Luftausströrmmodus die Ausströmbreite der ausströmenden Luft in der ersten Richtung im Wesentlichen unverändert bleibt, Erste Versuche haben ergeben, dass es dadurch möglich ist, eventuelle Behinderungen der ausströmenden Luft durch Querschnittsverengungen zu vermeiden. Dadurch kann eine besonders hohe Effektivität der Gesamtanlage sicher gestellt werden und es können unerwünschte Betriebsgeräusche vermieden werden.

Vorteilhaft ist es weiterhin, wenn die Luftaüsströmvorrichtung an der Oberseite eines Kraftfahrzeug-Armaturenbretts anbringbar ist. Diese Position der Luttausströmvorrichtung kann sich als besonders vorteilhaft erweisen. Dies gilt insbesondere dann, wenn die Luftaussirömvorrichtung der (wechselweisen) zugfreien Belüftung eines Kraftfahrzeuginnenraums sowie dem Defrosten von Scheiben dient.

Besonders vorteilhaft ist es, wenn bei der Luftausströmvorrichtung der erste Lüftauaströmmodus zum Defrosten einer Windschutzscheibe ist und/oder der zweite Luftsusströmmodus zur vorzugsweise zugfreien Belüftung eines Kraftfahrzeuginnenraus ausgebildet ist. Auf diese Weise kann die vorgeschlagene Luftausstförnvomchtung eine derartige Aufgabe besonders effektiv ausführen. Es ist darauf hinzuweisen, dass aufgrund der systemimmanenten Eigenschaften der vorgeschlagenen Luftausströmvorrichtung diese besonders geeignet für eine solche Aufgabe ist.

Ein möglicher Aufbau der Luftausströmvorrichtung besteht darin, dass diese eine Mehrzahl von Scheibenelementen aufweist, welche an einem drehbar gelagerten Achsenelement angeordnet sind. Mit einem derartigen Aufbau kann die für die Funktion der Luftausströmvorrichtung erforderliche veränderliche Luftaustrittscharakteristik besonders einfach und effektiv realisiert werden. Die Drehung der Scheibenelemente (bzw. dem Achsenelement) kann beispielsweise unter Verwendung eines Aktuators bzw. mechanischer Kraftübertragungsmittel erfolgen.

Vorteilhaft ist es, wenn zumindest ein Teil der Mehrzahl von Scheibenelementen unter einem Winkel am drehbar gelagerten Achsenelement angeordnet ist, wobei der Winkel in Abhängigkeit von der Position des Scheibenelements am Achsenelement unterschiedlich gewählt ist und/oder konstant ist. Entsprechende Bauweisen können sich je nach Einbausituation als besonders vorteilhaft erweisen. Insbesondere ist es auch möglich, dass Gruppen von Scheibenelementen vorgesehen sind, wobei die Winkel innerhalb einer derartigen Gruppe von Scheibenelementen konstant ist, die Winkel unterschiedlicher Gruppen von Scheibenelementen jedoch unterschiedlich sind. Möglich ist auch eine im Wesentlichen spiegelsymmetrische Anordnung, bei der die Winkel ausgehend von einer Symmetrieebene in beiden Richtungen betragsträßig gleich sind, wobei sich die entsprechenden Winkel jedoch vom Vorzeichen her unterscheiden.

Besonders vorteilhaft ist es, wenn zumindest ein Teil der Scheibenelemente derart geformt ist, dass diese in Axialrichtung des Achsenelements gesehen zumindest bereichsweise ein kreisrundes Lichtraurmprofil aufweisen. Bei einer derartigen Ausbildung ist es besonders einfach die vorab vorgeschlagene Ausbildung der Luftausströmvorrichtung in die Praxis umzusetzen, wobei Undichtigkeiten zwischen den Scheibenelementen und den sie umgebenden Gehäuse vermieden werden können.

Weiterhin kann es sich als vorteilhaft erweisen, wenn die Luftausströmvorrichtung zumindest eine Luftaustrittsklappe aufweist, welche verschwenkbar, insbesondere verschwenkbar entlang einer Drehachse im Bereich einer Luflaustrittsöffnung der Luftausströmvorrichtung angeordnet ist. Die Luftaustrittsklappe kann dann einfach von einer ersten "Extremposition" in eine zweite "Extremposition" umgelegt werden, sodass auf diese Weise die beiden Luftausströmmodl realisiert werden.

insbesondere bei dieser Ausbildung einer Lufiausströmvornchtung ist es von Vorteil, wenn zumindest eine im Bereich der Luftausinüsöffnung der Luftausstrornvorrichtung angeordnete Lurtströmungsaufspreizvorrichtung vorgesehen ist weiche vorzugsweise lediglich einen Teilbereich der Luftaustrittsöffnung strömungstechnisch beeinflusst. Hier ist es möglich, dass beispielsweise in einer ersten Störung der Luftaustrittsklappe ein erster Teil der Luftströrnungsaufspreizvorrichtung durchströmt wird, welcher beispielsweise eine besonders breite Auffächerung der ausströmenden Luft zur Realisierung eines Defrostbetriebs bewirkt. Demgegenüber kann in einer zweiten Stellung der Luftaustrittsklappe ein zweiter Teil der Luftströmungsaufspreizvorrichtung durchströmt werden (bzw. ist es auch möglich, dass die Luftströmungsaufspreizvorrichturg strömungstechnisch umgangen wird), sodass hier eine zur vorab beschriebenen Stellung unterschiedliche Breite der ausströmenden Luftströmung erzielt werden kann.

weiterhin ist es möglich die Luftausströmvorrichtung derart auszubilden, das zumindest zwei unterschiedliche ausgebildete LuftströmungsaufspreizVorrichtungen in die Luftaustrittsöffnung der Lufiausströmvorrichtung eingebracht werden können, wobei diese vorzugsweise wechselweise in die Luftaustrittsöffnung der Luftausströmvorrichtung eingebracht werden können. Auch auf diese Weise können die beiden (bzw. auch weitere) Luftausströmmodi auf einfache Weise realisiert werden. Beispielsweise kann es sich bei den Luftströmungsaufspreizvorrichtungen um geeignet strukturierte Luffleitblenden handelt, die wechselweise in eine entsprechend geformten Luftaustrittsöffnung hinein geklappt werden, Insbesondere mit dieser Ausbildung der Luftausströmvorrichtung kann eine "optisch ebene" Form des Armaturen" bretts realisiert werden.

inbesondere in diesem Zusammenhang kann es von Vorteil sein, wenn zumindest eine Luftbeeinflussungsvorrichtung, insbesondere zur Luftströmungsaufspreizvorrichtung in einem Totbereich der Luftausströmvorrichtung verbracht werden kann. Dadurch ist es möglich, eine Luftbeeinflussungseinrichtung, die für den aktuellen Luftausströmmodus der Luftausströmvorrichtung nicht benötigt wird, strömungstechnisch aus der Luftströmung zu "entfernen",

Weiterhin wird vorgeschlagen ein Armaturenbrett und/oder ein Cockpitmodul für ein Kraftfahrzeug mit zumindest einer Luftausströmvorrichtung mit dem oben beschriebenen Aufbau zu versehen. Ein entsprechend ausgebildetes Armaturenbrett bzw. Cockpitmodul weist dann die bereits vorab beschriebenen Eigenschaften und Vorteile in analoger Weise auf.

Weiterhin wird vorgeschlagen ein Kraftfahrzeug mit zumindest einer Luftausströmvorrichtung vom vorab beschriebenen Aufbau, mit zumindest einem, Armaturenbrett vom vorab beschriebenen Aufbau und/oder mit einem Cockpitmodul vom vorab beschriebenen Aufbau zu versehen. Auch ein entsprechend ausgebildetes Kraftfahrzeug weist die bereits vorab beschriebenen Eigenschaften in Vorteile in analoger Weise auf.

Weiterhin wird ein Verfahren zum Betreiben einer Luftausströmvornchtung, insbesondere einer Luftausströmvorrichtung für einen Kraftfahrzeuginnenraum vorgeschlagen, bei dem die Luftausströmvorrichtung zumindest zeitweise in zumindest einen ersten Luftausströmmodus und zumindest zeitweise in zumindest einen zweiten Luftausströmmudus verstellt wird, wobei bei einer Änderung des Luftausströmmodus die Richtung der ausströmenden Luft in einer ersten Richtung verändert wird und die Ausströmbreite der ausströmenden Luft in einer zweiten, zur ersten Richtung im Wesentlichen senkrechten Richtung verändert wird. Das Verfahren weist die bereits vorab beschriebenen Vorteile und Eigenschaften in analoger Weise auf. Insbesondere ist es möglich, das Verfahren im Sinne der vorab beschriebenen Weiterbildungsrnöglichkeiten in analoger Weise weiterzubilden.

im Folgenden wird die Erfindung anhand vorteilhafter Ausführungsbeispiele und unter Bezugnahme auf die belgefügte Zeichnung näher erläutert. Es zeigen:
- Fig. 1:: ein Kraftfahrzeugcöckpit in schematischer, perspektivischer Ansicht;
- Fig. 2:: eine Kraftfahrzeugklimanlage in perspektive- scher Ansicht:
- Fig. 3:: ein erstes Ausführungsbeispiel einer Körnbidüse im schemati- schem Querschnitt von vorne gesehen:
- Fig. 4:: das erste Ausführungsbeispiel einer Kombsdüse im schemati- schem Querschnitt von der Seite aus gesehen;
- Fig. 5:: ein zweites Ausführungsbeispiel einer Kombiduse in schema- tischer, perspektivischer Ansicht;
- Fig. 6:: eine erste Modifikation der in Fig. 5 gezeigten Kombidüse in schematischen Querschnitt von der Seite aus gesehen;
- Fig. 7:: eine zweite Modifikation der in Fig. 5 gezeigten Kombidüse in schematischel, perspektivischer Draufsicht;
- Fig. 8:: ein drittes Ausfuhrungsbeispiel für eine Kombidüse in einer ersten Steillung in schematicher Ansicht von oben;
- Fig. 9:: das dritte Ausführungsbeispiel einer Konibidüse in einer zwei- ten Stellung in schematischer Draufsicht von oben;
- Fig. 10;: das dritte Ausfuhrungsbespiel einer Kombidüse in der in Fig. 8 gezeigten Stellung in schematischem Querschnitt von der Seite aus gesehen;
- Fig. 11:: das dritte Ausführungsbeispiel einer Kombidüse in der in Fig. 9 gezeigten Stellung in schematichem Querschnitt von der Seite aus gesehen.

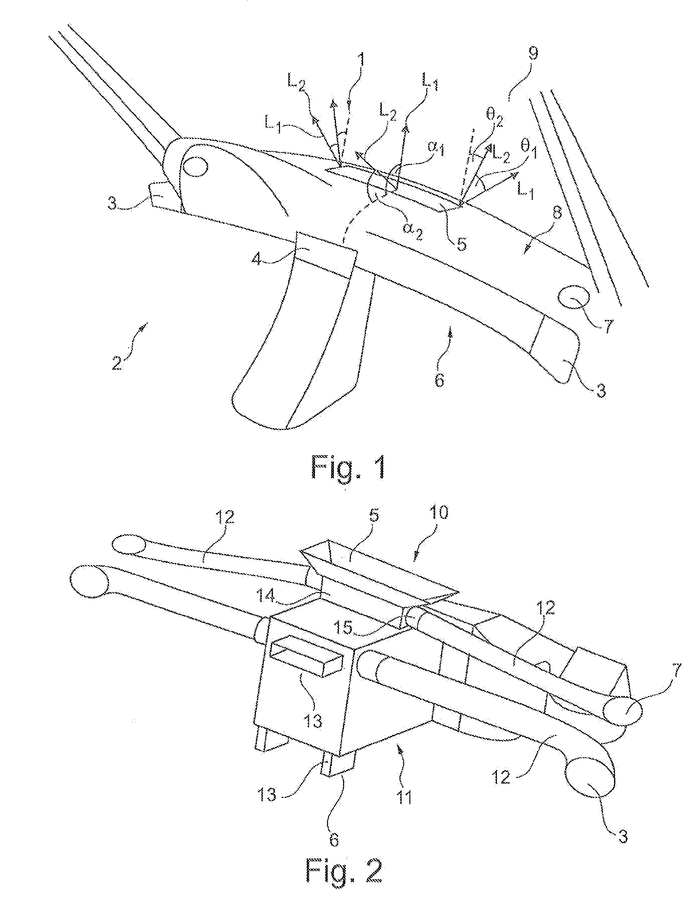

In Fig. 1 ist in schematischer Draufsicht der instrumentenbereich 1 (Cockpitmodul) eines Kraftfahrzeug-innenraums 2 in schematischer, perspektivischer Ansicht dargestellt. Zur Belüftung des Kraftfzahrzeug-Inneraums 2 dient eine Anzahl von unterschiedlich ausgebildeten Luftausströmerdüsen 3, 4, 5, 6, 7. Zur Belüftung des Fußraumbereichs des Kraftfahrzeug-Innenraums 2 dienen die Fußraumdüsen 6, die jedoch bei der in Fig. 1 gewählten perspektivischen Darsteilung nicht zu erkennen sind. Im Bereich der Instrumententafel 8 und den Fahrzeuginsassen zugewandt befinden sich die Seitendüsen 3, sowie eine Mitteldüse 4, Sowohl die Seilendüsen 3, als auch die Mitteldüse 4 sind in vertikaler Richtung gesehen in einer mittleren Höhe angeordnet Die Seitendüsen 3 sowie die Mitteldüse 4 beaufschlagen die Fahrzeuginsassen im Kopfbereich sowie im Brustbereich mit einer Luftströmung Weiterhin sind auf der Oberseite der Instrumententafel 8 eine Kombidüse 5, sowie zwei seitlich angeordnete seitliche Defrosterdusen 7 zu erkennen. Die seitlichen Defrosterdüsen 7 geben einen auf die Seitenscheiben gerichteten Luftstrom frei, sodass diese insbesondere bei kalten Außentemperaturen beschlagfrei, insbesondere frostfrei bleiben. Die in der Mitte der Instrumententafel 8 angeordnete Kombidüse 5 dient sowohl dem Defroster der Windschutzscheibe 9, als auch der zugfreien Belüftung des Kraftfahrzeug-Innenraums 2, insbesondere im Falle hoher Außentemperaturen und/oder großer Kühlleistung der Kraftfahrzeugklimaanlage 10. Dazu ist die Kombidüse 5 verstellbar ausgeführt. In einem Luftaüsstrommodus gibt die Kombidüse 5 eine Luftströmung L, in Richtung der Windschutzscheibe 9 ab. Dazu wird die Luftströmung L unter einem Winkel α₁ im Verhältnis zur Oberfläche der Instrumententafel 8 abgegeben. Um die Windschutzscheibe 9 möglichst großflächig zu enteisen, ist der Spreizwinkel θ₁ sehr groß, so dass große Bereiche der Windschutzscheibe 9 vom Luftstrom L₁ der Mitteldüse 4 erfasst werden. Die Settenbereiche der Windschutzscheibe 9 werden dabei zusätzfich über die seitlichen Defrostdüsen 7 enteist.

In einem zweiten Ausströmungsmodus wird dem gegenüber eine Luftströmung L₂ abgegeben, die der zugfreien Belüftung des Kraftfahrzeug-Innenraums dient. Die Luftströmung L₂ wird einerseits unter einem relativ flachen Windel α₂ abgegeben, sodass die aus der Mitteldüse 4 austretende Lurtströmung L₂ nicht auf die Windschutzscheibe 9 trifft. Dies ist wichtig, da ansonsten die bei hohen Umgebungstemperaturen aus der Mitteldüse 4 ausströmende stark abgekühlte Luft auf der Windschutzscheibe 9 einen Beschlag verursachen würde. Um für die Fahrzeuginsassen einen hohen Komfort und eine Zugluftfreiheit zu realisieren wird darüber hinaus der Spreizwinkel θ₂ der Luftströmung L₂ im Verhältnis zur Defrostluftströmung L₁ deutlich verringert. Vorzugsweise ist der Spreizwinkel θ₂ im indirekten Belüftungsfall so gewählt dass er nicht auf die Fahrzeuginsassen trifft. Dies kann insbesondere dadurch realisiert werden, dass die Luftströmung L₂ gewissermaßen "zwischen den vorderen Fahrzeuginsassen" hindurchtritt.

In Fig. 2 ist in schematischer Ansicht eine Kraftfahrzeugldirnaanlage 10 dargestellt, die für die in Fig. 1 gezeigte. Situation verwendet werden kann. Vom grundsätzlichen Aufbau her weist die Kraftfahrzeugklimaanlage 10 einen ähnlichen Aufbau wie Standard-Kraftfahrzeugklimaanlage auf: vom zentralen Luftaufbereitungsteil 11 führen Luftschächte 13 bzw. Luftkanäle 12 zu den unterschiedlichen Luftauslassdüsen 3, 4, 5, 6, 7. Lediglich der zentrale Luftschacht 14 der Mitteldüse 5 ist im Verhältnis zu Standard-Klimaanlagen modiffiziert. Vorzugsweise weist der zentrale Luftschacht 14 der Kombidüse 5 an seinen seitlichen Luftstutzen 15 Luftklappen auf, die bei einem Kühlbetrieb der Kraftfahrzeugklimaanlage 10 das Ausströmen von Luft aus den seitlichen Defrostdüsen 7 unterbanden Auf diese Weise ist es möglich, dass ohne größere Bauraummodifikationen je nach Kundenwunsch Standard-Klimaanlagen bzw. als Sonderausstattung Klimaanlagen 10 mit indirekter Belüftungsmöglichkeit eingebaut werden.

In Fig, 3 ist ein erstes mögliches Ausführungsbelspiel einer Kombidüse 16, die für die in Fig. 1 gezeigte Bauraumsituation bzw. die in Fig. 2 dargestellte Kraftfahrzeugklimaanlage 10 verwendet werden kann. Die Kombidüse 16 besteht aus einem Gehäuse 17, in dem eine Achse 18 drehbar gelagert ist. Die Achse 18 kann beispielsweise über einen vorliegend nicht dargestellten Aktuator gedreht werden Selbstverständlich ist auch ein anders gearteter Antrieb, wie beispielsweise ein Antrieb unter Verwendung von mechanischen Kraftübertragungselementen wie beispielsweise Steuerseilen oder drehbaren Wellen möglich. An der Achse 18 sind vorliegend zwei Gruppen 19, 20 mit jeweils einer größeren Anzahl von Scheiben 21 (vorliegend 14 Scheiben 21) drehfest befestigt Dadurch drehen sich die Scheiben 21 bei einer Drehung der Achse 18 mit dieser mit.

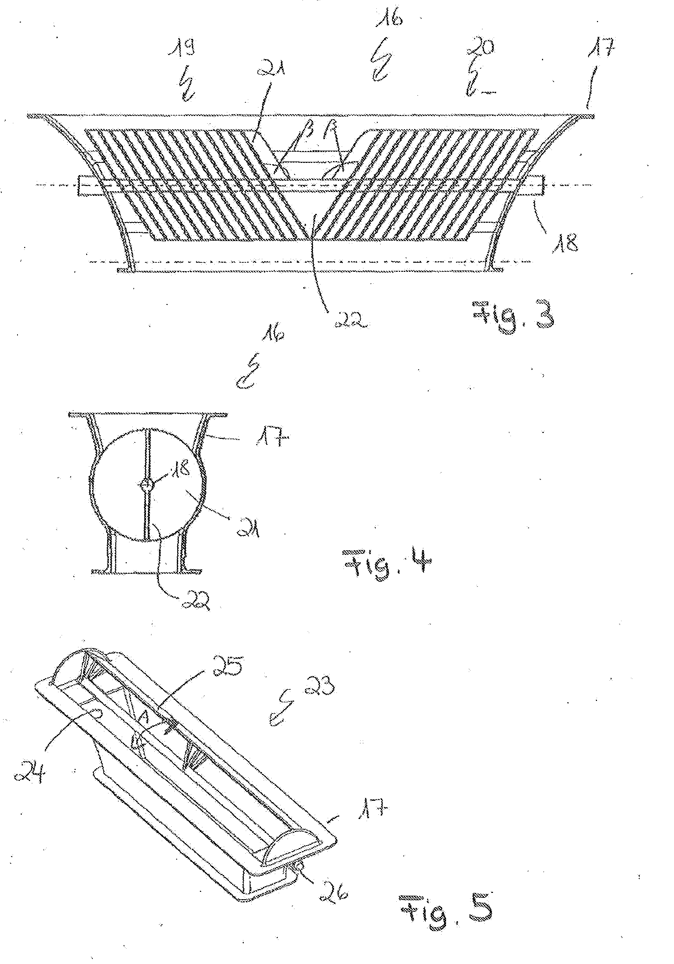

Wie man weiterhin Fig. 3 entnehmen kann sind die Scheiben 21 unter einem Winkel β an der Achse 18 angeordnet. Der Befestigungswinkel β der Scheiben 21 ist vom Betrag her bei beiden Gruppen 19, 20 gleich groß. Jedoch sind die Scheiben 21 der beiden Gruppen 19, 20 jeweils in unterschiedlichen "Richtungen" eingebaut. Der eintretende Luftstrom wird somit in beide Richtungen aufgespreizt. Wird die Achse 18 gedreht, so tritt dem durch die kombidüse 16 hindurch tretenden Luftstrom ein verringerter effektiver Aufspreizwinkel entgegen. Würde beispielsweise die Achse 18 um 90° gegenüber der in Fig. 3 dargestellten Stellung verdreht werden, so würde der Luftstrom ohne Aufspreizung durch die Kombidüse 16 hindurchtreten.

In Fig, 4 ist die in Fig 3 dargestellte Kombidüse nochmals in einem Quer" schnitt von der Seite aus gesehen. Wie man insbesondere Fig. 4 entnehmen kann sind die Scheiben 21, der Befestigungs-ovinkel β der Scheiben 21 sowie das Gehäuse 17 so aufeinander angepasst dass diese im Wesentlichen spielfrei in einem kreisförmig ausgebildeten Gehäusebereich des Gehäuses 17 der Kombidüse 16 passen. Darüber hinaus ist zu erkennen, dass jeweils zwischen den einzelnen Scheiben 21 eine Trennwand 22 parallel zur Längserstreckung des Gehäuses 17 (und damit parallel zur Richtung der Achse 18) vorgesehen ist Mit Hilfe der Trennwand ist es möglich, den Winkel α mit dem die Luftströmung aus der Kombidüse 16 austritt, besonders, effektiv zu variieren.

In Fig. 5 ist ein weiteres Ausführungsbeispiel einer Kombidüse 23 dargestellt. Bei der vorliegend dargestellten Kombidüse ist im Bereich einer Austrittsöffnung des Gehäuses 17 der Kombidüse 23 an der Außenseite eine Luftleitklappe 25 angeordnet, die um eine Achse 26 verschwenkbar angeordnet ist. Dies ist in Fig. 5 durch einen Doppelpfeil A symbolisiert. Durch ein "Umklappen" der Lüftleitklappe 25 kann der Ausströmwinkel α der aus der Kombidüse 23 austretenden Luftströmung zwischen zwei Werten verändert werden. Um den Aufspreizwinkel θ zu verändern, können in einem Teilbereich (gegebenenfalls auch in beiden Teilbereichen) der Austrittsöffnung 24 Luftleitblenden vorgesehen werden, die jeweils einen unterschiedlichen Aufspreizwinkel θ der austretenden Luft bewirken.

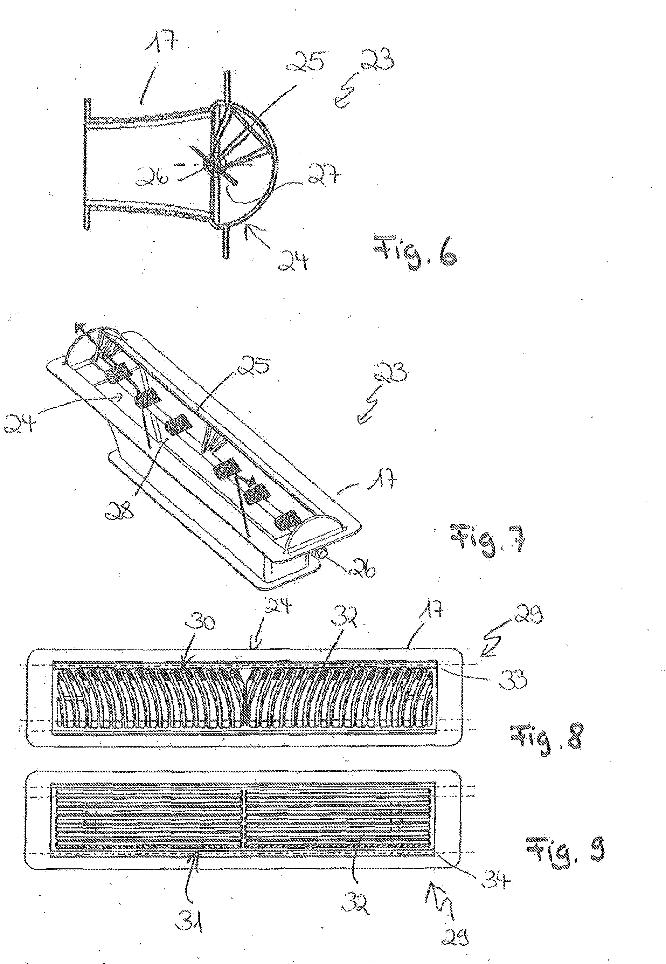

In Fig. 6 ist die in Fig. 5 dargestellte Kombidüse 23 in seitlichem Querschnitt dargestellt. Als zusätzliche mögliche Modifikation ist bei der in Fig. 6 dargestellten Kombidüse 23 im Bereich der Achse 26 ein zusätzliches Luftleitelement 27 drehfest an der Achse 26 angeordnet. Das zusätzliche Luftleitelement 27 kann eine bessere Ablenkung der Luftströmung bewirken.

In Fig. 7 ist skizziert, wie durch ein (gegebenenfalls auch mehrere) Luffaufspreizelement 28 der Aufspreizwinkel θ die aus der Kombidüse 23 austretenden Luftströmung verändert werden kann. Hier ist es moglich, dass die Luftaufspreizelemente (teilweise) drehfest und/oder unbeweglich relativ zum Gehäuse 17 angeordnet sind.

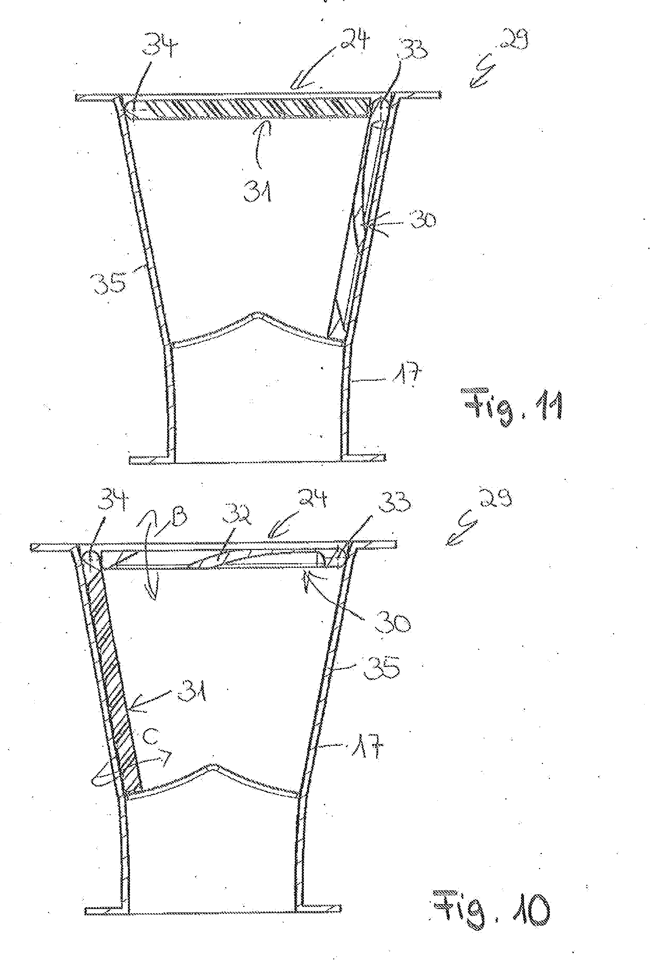

In den Fig. 8 bis 11 ist ein weiteres Ausführungsbeispiel einer Kombidüse 29 in unterschiedlichen Ansichten und unterschiedlichen Einstellungen dargestellt. In den Fig. 8 und 9 ist die Kombidüse 29 jeweils in zwei unterschiedlichen Stellungen in Draufsicht von oben dargestellt, während die Kombidüse 29 in den Fig. 10 und 11 in zwei unterschiedlichen Einstellungen im Querschnitt von der Seite aus gesehen dargestellt ist. Bei dem vorliegend dargestellten Ausführungsbeispiel einer Kombidüse 29 wird die Luftströmung Jeweils durch eine von insgesamt zwei unterschiedlich ausgebildeten Luftleitblenden 30, 31 beeinflusst. Die Luftleitblenden 30, 31 können beispielsweise in einem Spritzgussverfahren aus einem Kunststoffmaterial ausgeformt werden und weisen eine Vielzahl von unterschiedlichen Luftleitlamellen 32 auf. Die Luftleitlamellen 32 sind so ausgeformt und angeordnet (insbesondere durch geeignete Anschrägungen), dass sich bei Verwendung der beiden unterschiedlichen Luftleitblenden 30, 31 jeweils eine unterschiedliche Luftströmung sowohl hinsichtlich Ausströmwinkel a, als auch hinsichtlich Aufspreizwinkel θ ergibt.

Beim dargestellten Ausführungsbeispiel handelt es sich bei der Luftleitblende 30 um eine Defrosterstellung der Kombidüse 29, bei der die Luftströmung stark aufgespreizt wird (großer Aufspreizwinkel θ) und in Richtung der Windschutzscheibe 9 gelenkt wird. Dem gegenüber wird bei Verwendung der Luftleitblende 31 die ausströmende Luft von der Windschutzscheibe 9 fern jehalten und mit einem kleinen Ausströmwinkel α direkt in den KraftfahrzeugInnenraum 2 gelenkt. In dieser Stellung ist auch der Aufspreizwinkel θ der ausströmenden Luft klein, so dass von den Fahrzeuginsassen Zugluft fern gehalten wird.

Die beiden Luftleitblenden sind jeweils drehfest mit Achsen 33, 34 verbunden wobei die Achsen 33, 34 beispielsweise durch Aktuatoren gedreht werden können. Mit Hilfe einer entsprechenden Drehbewegung der Achsen 33 ist es möglich, die dazu korrespondierende Luftleitblende 30 jeweils in den Bereich der Ausströmöffnung 24 der Kombidüse 29 zu bewegen, bzw. seitlich benachbart zu einer Gehäusewand 35 des Gehäuses 17 anzuklappen. In einer derartigen angeklappten Stellung ist die korrespondierende Luftleitblende 31 im Wesentlichen vollständig aus der Luftströmung entfernt, beeinflusst die durch die Kombidüse 29 hindurch strömende Luft dementsprechend nicht. Die Drehbewegung der Luftleitblenden 30, 31 ist in Fig. 10 durch Doppelpfeile B, C symbolisiert.

### Bezugszeichenliste

- 1.: Instrumentenbereich
- 2.: Kraftfahrzeug-Inenraum
- 3.: Seitendüse
- 4.: Mitteldüse
- 5.: Kombidüse
- 6.: Fußraumdüse
- 7.: seitliche Defrostdüse
- 8.: Instrumententafel
- 9.: Windschutzscheibe
- 10.: Kraftfahrzeugklimaanlage
- 11.: Luftaufbereitungsteil
- 12.: Luftkanal
- 13.: Luftschacht
- 14.: Zentraler Luftschacht
- 15.: Luftstutzen
- 16.: Kombidüse
- 17.: Gehäuse
- 18.: Achse
- 19.: inke Gruppe
- 20.: rechte Gruppe
- 21.: Scheibe
- 22.: Trennwand
- 23.: Kombidüse
- 24.: Austrittsöffnung
- 25.: Luftleitklappe
- 26.: Achse
- 27.: zusätzliches Luftleitelment
- 28.: Luftaufspreizelement
- 29.: Kombidüse
- 30.: Luftleitblende
- 31.: Luftleitblende
- 32.: Luftleitlamellen
- 33.: Achse
- 34.: Achse
- 35.: Gehäusewand
- 36.A, B, C:: Bewegungsrichtung
- 37. α: Richtungswinkel
- 38.: β Befestigungswinkel
- 39. θ: Aufspreizwinkel
- 40.: L Luftströmung

## Patentansprüche

1. Luftausströmvorrichtung (5, 16, 23, 29), insbesondere Luftausströmvorrichtung (5, 16, 23, 29) für einen Kraftrahrzeuginnenraum (2), die zumindest einen ersten Luftausströmmodus (L₁) und zumindest einen zweiten Luftausströmmodus (L₂) aufweist, **dadurch gekennzeichnet, dass** bei einer Änderung des Luftausströmmodus (L₁, L₂) die Richtung der ausströmenden Luft (L) in einer ersten Richtung (α) verändert wird und die Ausströmbreite (θ) der ausströmenden Luft (L) in einer zweiten, zur ersten Richtung im Wesentlichen senkrecht stehenden Richtung verändert wird.

2. Luftausströmvorrichtung (5, 16, 23, 29) nach Anspruch 1, **dadurch gekennzeichnet, dass** die Luftausströmvorrichtung (5, 16, 23, 29) derart ausgebildet und eingerichtet ist, dass sie in zumindest dem ersten Luftausströmmodus (L₁) und/oder dem zweiten Luftausströmmodus (L₂) eine diffuse Luftströmung und/oder eine gerichtete Luftströmung freigibt

3. Luftausströmvorrichtung (5, 16, 23, 29) nach Anspruch 1 oder 2, **dadurch gekennzeichnet, dass** bei einem Wechsel des Luftausströmmodus (L₁, L₂) die Ausströmbreite der ausströmenden Luft (L) in der ersten Richtung im Wesentlichen unverändert bleibt.

4. Luftausströmvorrichtung (5, 16, 23, 29) nach einem der vorangehenden Ansprüche, **dadurch gekennzeichnet, dass** die Luftausströmvorrichtung (5, 16, 23, 29) an der Oberseite eines Kraftfahrzeug-Armaturenbretts (8) anbringbar ist.

5. Luftausströmvorrichtung (5, 16, 23, 29) nach einem der vorangehenden Ansprüche, insbesondere nach Anspruch 4, **dadurch gekennzeichnet, dass** der erste Luftausströmmodus (L₁) zum Defrosten einer Windschutzscheibe (9) ausgebildet ist und/oder der zweite Luftausströmmodus (L₂) zur vorzugsweise zugfreien Belüftung eines Kraftfahrzeuginnenraums (2) ausgebildet ist.

6. Luftausströmvorrichtung (5, 16, 23, 29) nach einem der vorangehenden Ansprüche, **gekennzeichnet durch** eine Mehrzahl von Scheibenelementen (21), welche an einem drehbar gelagerten Achsenetement (18) angeordnet sind.

7. Luftausströmvorrichtung (5, 16, 23, 29) nach einem der vorangehenden Ansprüche, insbesondere nach Anspruch 6, **dadurch gekennzeichnet, dass** zumindest ein Teil der Mehrzahl von Scheibenelementen (21) unter einem Winkel (β) am drehbar gelagerten Achsenelement (18) angeordnet ist, wobei der Winkel (β) in Abhängigkeit von der Position des Scheibenelementes (21) am Achsenelement (18) unterschiedlich gewählt ist und/oder konstant ist.

8. Luftausströmvorrichtung (5, 16, 23, 29) nach einem der vorangehenden Ansprüche, **dadurch gekennzeichnet, dass** zumindest ein Teil der Scheibenelemente (21) derart geformt ist, dass diese in Axialrichtung des Achsenelements (18) gesehen zumindest bereichisweise ein kreisrundes Lichtraumprofil aufweisen.

9. Luftausströmvorrichtung (5, 16, 23, 29) nach einem der vorangehenden Anspruche, **gekennzeichnet durch** zumindest eine Luftaustrittsklappe (25, 26), welche verschwenkbar, insbesondere verschwenkbar entlang einer Drehachse (26) im Bereich einer Luftaustrittsöffnung (24) der Luftausstromvorrichtung (23) angeordnet ist.

10. Luftausströmvorrichtung (5, 16, 23, 29) nach einem der vorangehenden Ansprüche, insbesondere nach Anspruch 9, **gekennzeichnet durch** zumindest eine im Bereich der Luftaustriltsöffnung (24) der Luftausströmvorrichtung (5, 16, 23, 29) angeordnete Luftströmungsaufspreizvorrichtung (21, 28, 30, 31), welche vorzugsweise lediglich einen Teilbereich der Luftaustrittsöffnung (24) strömungstechnisch beeinflusst.

11. Luftausströmvorrichtung (5, 16, 23, 29) nach einem der vorangehenden Ansprüche, **gekennzeichnet durch** zumindest zwei unterschiedlich ausgebildete Luftströmungsaufspreizvorrichtungen (30, 31), welche vorzugsweise wechselweise in die Luftaustrittsöffnung (24) der Luftausströmvorrichtung (29) eingebracht werden können.

12. Luftäusströmvorrichtung (5, 16, 23, 29) nach einem der vorangehenden Ansprüche, insbesondere nach Anspruch 11, **dadurch gekennzeichnet, dass** zumindest eine Luftbeeinflussungseinrichtung (30, 31), insbesondere zumindest eine Luftströmungsaufspreizvorrichtung (30, 31) in einen Totbereich der Luftausströmvorrichtung (29) verbracht werden kann.

13. Armaturenbrett (8) und/oder Cockpitmodul (1) für ein Kraftfahrzeug, **gekennzeichnet durch** zumindest eine Luftausströmvorrichtung (5, 16, 23, 29) nach einem der vorangehenden Ansprüche.

14. Kraftfahrzeug, **gekennzeichnet durch** zumindest eine Luftausströmvorrichtung (5, 16, 23, 29) nach einem der Ansprüche 1 bis 12 und/oder **durch** ein Armaturenbrett (8) nach Anspruch 13 und/oder **durch** ein Cockpitmodul (1) nach Anspruch 13.

15. Verfahren zum Betreiben einer Luftausströmvorrichtung (5, 16, 23, 29), insbesondere einer Luftausströmvorrichtung (5, 16, 23, 29) für einen Kraftfahrzeuginnenraum (2), **dadurch gekennzeichnet, dass** die Luftausströmvorrichtung (5, 16, 23, 29) zumindest zeitweise in zumindest einen ersten Luftausströmmodus (L₁) und zumindest zeitweise in zumindest einen zweiten Luftausströmmodus (L₂) verstellt wird, wobei bei einer Änderung des Luftausströmmodus (L₁, L₂) die Richtung der ausströmenden Luft (L) in einer ersten Richtung (α) verändert wird und die Ausstrombreite (θ) der ausströmenden Luft (L) in einer zweiten, zur ersten Richtung im Wesentlichen senkrecht stehenden Richtun verändert wird,
